Europäisches Patentamt

European Patent Office

Office européen des brevets

(11) Publication number: **0 385 793**
**A2**

# EUROPEAN PATENT APPLICATION

(21) Application number: 90302226.7

(51) Int. Cl.5: **F02P 5/15**

(22) Date of filing: **01.03.90**

(30) Priority: **01.03.89 JP 46535/89**

(43) Date of publication of application:
**05.09.90 Bulletin 90/36**

(84) Designated Contracting States:
**DE FR GB**

(71) Applicant: **HITACHI, LTD.**
**6, Kanda Surugadai 4-chome**
**Chiyoda-ku, Tokyo 100(JP)**

(72) Inventor: **Atago, Takeshi**
**1756-51, Tarasaki Katsuta-Shi**
**Ibaraki-Ken(JP)**
Inventor: **Nagano, Masami**
**1308-3, Tabiko Katsuta-Shi**
**Ibaraki-Ken(JP)**

(74) Representative: **Molyneaux, Martyn William et al**
**c/o Ladas & Parry Isartorplatz 5**
**D-8000 Munich 2(DE)**

(54) **Multiple-cylinder engine combustion control apparatus and method of controlling said engine.**

(57) A multiple-cylinder engine combustion control apparatus and method of controlling the engine is arranged to detect variation in the rotational speed of the engine by a crank shaft sensor or a cam shaft sensor and to determine a particular cylinder causing the variation in rotational speed by a microprocessor (12). The microprocessor (12) is arranged to modify the operating condition of the cylinder causing the variation in engine rotational speed by varying at least one of the engine ignition timing and the fuel injection pulse width so as to correct the rotational speed variation.

EP 0 385 793 A2

Fig. 10

Fig. 2

1a

# MULTIPLE-CYLINDER ENGINE COMBUSTION CONTROL APPARATUS AND METHOD OF CONTROLLING SAID ENGINE

## BACKGROUND OF THE INVENTION

### 1) Field of the Invention

This invention relates to a combustion control apparatus and method therefor which is capable of obtaining a stable engine output by controlling the combustion of an engine. More particularly, the present invention relates to a multiple-cylinder engine combustion control apparatus and method which is capable of controlling the combustion of each cylinder in a multiple-cylinder engine.

### 2) Description of the Related Art

Various systems for controlling the drive of a vehicle engine are known. In many, the object of control is an engine as a whole, which is generally controlled in terms of ignition timing. Few prior art apparatus control combustion in a multiple-cylinder engine in consideration of various fluctuations in each cylinder caused by, for example, incomplete ignition.

It is known to provide an apparatus for controlling the combustion in each cylinder in a multiple-cylinder engine by controlling the ignition timing in correspondence with the ratio of the combustion pressure and the dynamic pressure in each cylinder at various crank angles, as shown in US-A-4,622,939.

In, for example, US-A-4,759,327, a control method is provided for controlling the ignition timing of an engine so as to prevent the phenomenon of surging during normal drive or deceleration of the vehicle, especially in the low speed range. That is, a change (dN/dt) in the number of revolutions of the engine is taught and the next ignition timing is controlled on the basis of the variation. In this prior art, however, the object of control is the total engine, and it is far from a method of controlling combustion in consideration of the non-uniformity of various conditions in each cylinder.

As described above, in US-A-4,622,939, although combustion control for each cylinder is possible, since it is necessary to attach a combustion pressure sensor for each cylinder, the cost of the control apparatus as a whole is greatly increased. On the other hand, the method of US-A-4,759,327 is disadvantageous in that since the non-uniformity in each cylinder is not taken into consideration, accurate engine control is not realised, because the number of revolutions fluctuates and the rotation is unstable especially at low-speed rates of rotation of the engine, and also it is impossible to satisfy the severe requirement of reduction in fuel consumption.

It is an object of the present invention to eliminate the above-described problems in the prior art and to provide multiple-cylinder engine combustion control apparatus and method which enable accurate combustion control for each cylinder at a comparatively low cost. It is another object to provide an apparatus and method which is capable of satisfying a reduction in fuel consumption with little fluctuation in engine rates of rotation and low instability.

## SUMMARY OF THE INVENTION

According to one aspect of this invention there is provided a multi-cylinder engine control apparatus including means for detecting variation in the rotational speed of the engine, means for determining the cylinder causing the variation, and means for modifying the operating condition of said cylinder causing the variation to correct the rotational speed variation.

Preferably the means for modifying the cylinder operating condition is a means arranged to vary at least one of engine ignition timing and fuel injection pulse width.

Advantageously the means for determining the cylinder causing the variation includes detecting means for at least one of the maximum crank shaft speed, the summation of maximum and minimum crank shaft speed, and the crank shaft rotational angle at which maximum rotation speed occurs.

Advantageously the detecting means for the crank shaft rotational angle at which maximum rotation speed occurs is measured from the time of ignition of a relevant cylinder.

Conveniently the means for detecting variation in the rotational speed of the engine includes one of a crank shaft rotational angle sensor and a cam shaft rotational angle sensor, said sensor being arranged to produce a pulsed output the period of which varies in dependence upon the engine rotational speed. Preferably sampling means are provided for sampling the period of the pulsed output from the sensor and for determining when at least one of a maximum, a minimum, and an average engine rotational speed is achieved.

In a currently preferred embodiment the means for determining the cylinder causing the variation comprises said rotational angle sensor, cylinder position timing means arranged to produce a pulse train, the period of the pulses in said pulse train being representative of a particular cylinder, and counting means for counting the number of pulses produced by the rotational angle sensor in the period of the pulses in said pulse train. Conveniently the number of pulses in said pulse train is the same as the number of engine cylinders.

Advantageously a processing means adapted to determine and compare the actual crank shaft rotational angle at which maximum rotation occurs with a predetermined crank shaft rotational angle at which maximum rotation occurs, and to combine the difference therebetween with a basic ignition timing angle to produce the corrected ignition timing signal.

In a preferred embodiment there is provided processing means adapted to determine and compare the actual maximum crank shaft speed with a predetermined maximum crank shaft speed, and to correct the difference therebetween to a correction coefficient for the fuel injector pulse width and wherein a basic fuel injection pulse width is modified by said correction coefficient.

According to a further aspect of this invention there is provided a method of controlling a multi-cylinder engine including the steps of detecting variation in the rotational speed of the engine, determining the cylinder causing the variation, and modifying the operating conditions of the cylinder causing the variation to correct the rotational speed variation.

By the measures of the present invention for solving the problems, the fluctuating state of the detected number of revolutions in each cylinder in a multiple-cylinder engine is obtained, and the combustion state in each cylinder is grasped from the thus obtained fluctuating state in each cylinder, whereby the ignition timing of the multiple-cylinder engine and/or the amount of fuel injection is adjusted. Thus, it is possible to control the combustion in each cylinder in the optimum state.

## BRIEF DESCRIPTION OF THE DRAWINGS

The invention will now be described by way of example with reference to the accompanying drawings in which:-

Figure 1 schematically shows the entire structure of an embodiment of a multiple-cylinder engine fuel control apparatus in accordance with this invention;

Figure 2 is a block schematic diagram of the control unit of the control apparatus shown in Figure 1;

Figures 3(a) and 3(b) show the waveforms of the rotation sensor of the control apparatus shown in Figure 1;

Figure 4 shows the waveform of the state of fluctuation in an engine's rotation speed in correspondence with the operational state of the engine;

Figure 5 shows the state of fluctuation in an engine rotational speed for explaining the principle of the present invention;

Figures 6 to 8 are graphs showing the relationship between the performance of the engine and various driving parameters;

Figure 9 shows the content of data stored in a map in an EP-ROM;

Figures 10 and 11 are flowcharts of the control apparatus according to the present invention; and

Figures 12 and 13 both show the content of data stored in a map in a respective RAM.

In the Figures like reference numerals denote like parts.

## DESCRIPTION OF THE PREFERRED EMBODIMENT

An embodiment of the present invention will be explained in detail with reference to the accompanying drawings.

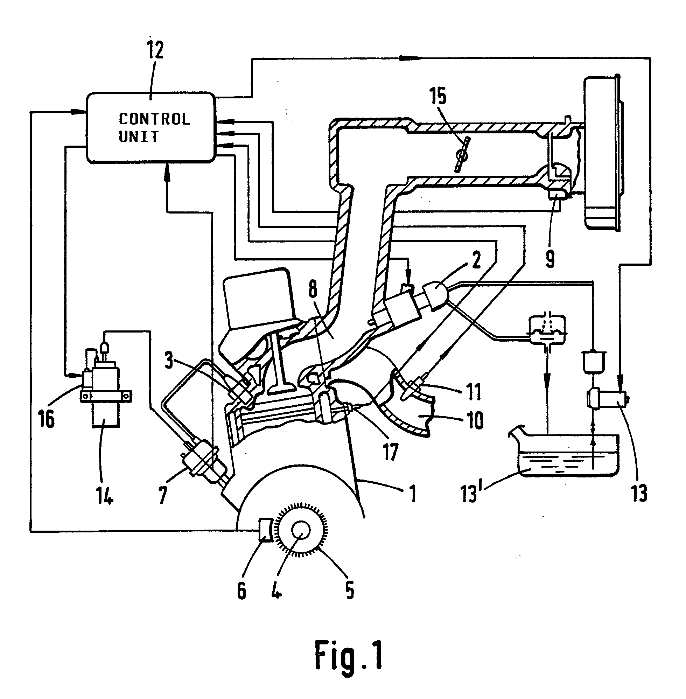

Referring to Figure 1, a multiple-cylinder engine 1 provided with a multiple-cylinder engine combustion control apparatus is shown. In each cylinder of the, for example, four cylinder multiple-cylinder engine, is an injector 2 for supplying fuel and an ignition plug 3 for controlling the combustion of the fuel, the injector and plug being so controlled as to have the optimum combustion state in each cylinder. A rotary plate 5 provided with a plurality of (e.g. 180) projections on the outer periphery thereof is attached to a crankshaft 4 of the multiple-cylinder engine 1. In proximity to the rotary plate 5, a rotation detecting sensor 6 for detecting the rotation of engine is provided. A distributor 7 is attached to a part, namely, a camshaft of the engine 1, and the timing for the corresponding cylinder is detected by a sensor provided in the distributor.

In the upstream portion of an intake pipe 8 of the engine 1, is an air flow sensor 9 for detecting the amount of intake air. An oxygen sensor 11 for sensing the combustion state of the cylinder by detecting the oxygen concentration in the exhaust gas is provided on the wall surface of an exhaust pipe 10 of the engine 1. On the outer wall surface of the engine 1, is a water temperature sensor 17 for detecting the state of the engine by detecting the temperature of the engine coolant. The output of each of the various sensors, namely, the rotation detecting sensor 6, the timing detector within the distributor 7, the air flow sensor 9, the oxygen sensor 11 and the water temperature sensor 12 is input to an electronic control unit 12, which is the main constituent of a multiple-cylinder engine combustion control apparatus of the present invention. A throttle valve 15 is opened in dependence upon movement of an accelerator pedal (not shown).

The electronic control unit 12, the operation of which will be described in detail later, controls the operation of a fuel pump 13 feeding from a tank 13' for supplying pressurised fuel to the injector 2, and the operation of the injector 2. The control unit 12 also controls the primary current of an ignition coil 14 which generates a high voltage secondary voltage for igniting the fuel by producing a spark on the ignition plug 3 at the optimum time for the engine driving state by turning on/off an ignition circuit 16 attached to the side wall of the ignition coil 14.

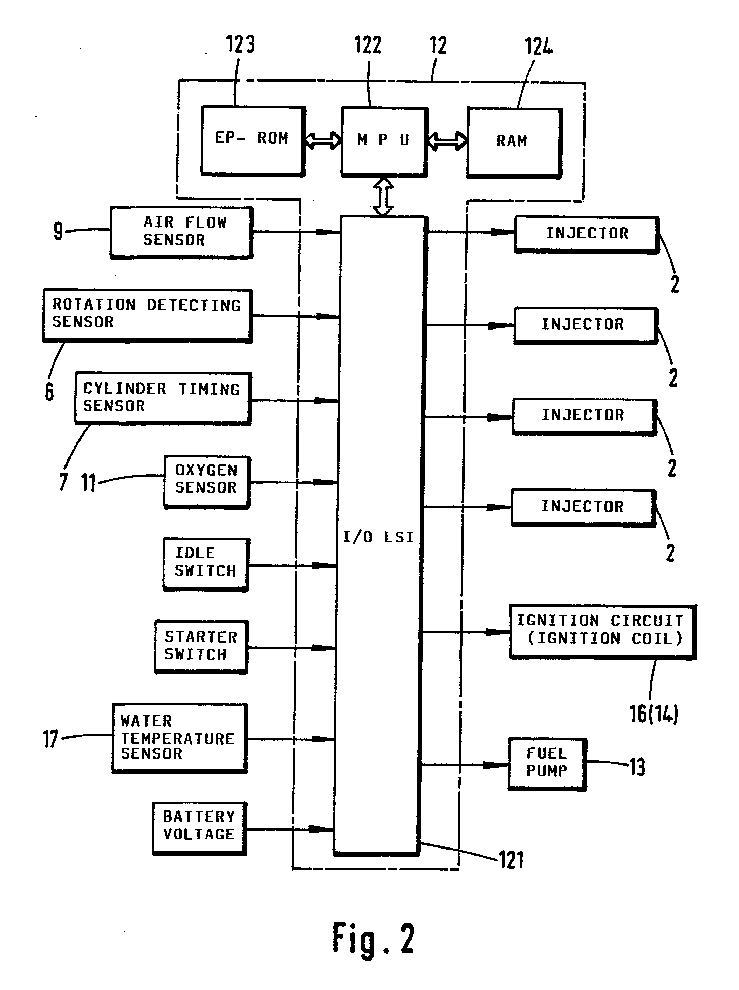

Figure 2 shows the entire circuitry of the electronic control unit 12 in block schematic form and the above-described various sensors. As shown in Figure 2, the electronic control unit 12 is formed by a microcomputer. In more detail, the electronic control unit 12 is provided with an input/output circuit (I/O LSI) 121, a microprocessing unit (MPU) 122 (such as Hitachi HD 63B03Y), a rewritable memory (EP-ROM) 123 and a random access memory (RAM) 124, and these members are connected with each other by a data bus. The air flow sensor 9, the rotation detection sensor 6, the cylinder timing sensor within the distributor 7, the oxygen sensor 11, a starter switch (not shown) for detecting the drive of a starter at the start of the engine, an idle switch which is turned on when the throttle valve 15 is closed to a predetermined angle, thereby detecting the idle state of the engine, the water temperature sensor 17 and a battery voltage detector for detecting the voltage of the battery, are connected to the I/O LSI 121 of the electronic control unit 12. The I/O LSI 121 converts input signals to pulse signals and outputs them to the MPU 122. The I/O LDI 121 is further connected to the four injectors 2, the ignition coil 14, the ignition circuit 16 thereof and the fuel pump 13 and controls the operations thereof.

The controlling operation of the electronic control unit 12 having the circuit explained above will now be described.

The driving conditions of the engine 1 are fundamentally represented by the intake air flow $Q_a$ detected by the air flow sensor 9 and the number $N_e$ of revolutions detected by the rotation detecting sensor attached to the crankshaft 4 of the engine 1. These signals $Q_a$ and $N_e$ are input to the electronic control unit 12 so as to open the valves of the injectors 2 provided for the respective cylinders of the engine 1. The injectors 2 are provided with pressurised fuel by the fuel pump 13 in the required amount depending upon the rotation speed of the engine, namely, the amount of fuel represented by $Q_a/N_e$ is delivered to each cylinder. At this time, the timing corresponding to each cylinder of the engine is detected by a cylinder timing sensor provided within the distributor 7 attached to the camshaft of the engine.

The ignition plug 3 for igniting the fuel in each cylinder of the engine is operated at the required time for interrupting the primary current of the ignition coil 14. The electronic control unit 12 controls the ignition timing ADV simultaneously with the control of the amount of fuel on the basis of the signals of the intake air flow $Q_a$ and the number $N_e$ of revolutions.

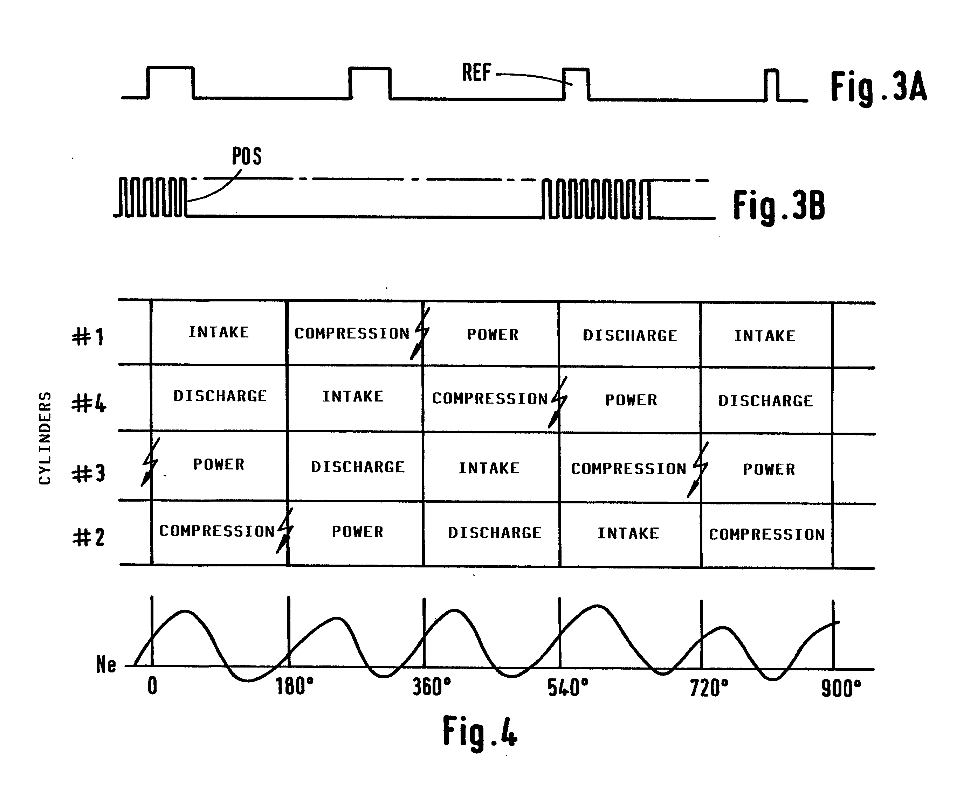

Figures 3(a) and 3(b) show the waveform of the output REF of the cylinder timing sensor provided within the distributor 7 attached to the camshaft of the engine 1 and the waveform of the output POS of the rotation detecting sensor 6 for detecting the rotation of the crankshaft 4 of the engine 1, respectively. In Figure 3(a), the cylinder timing sensor outputs one output pulse REF per cylinder of the four cylinders of the engine 1 assumed in this exemplary embodiment; in other words, one output REF pulse for each 180 degrees in the four cylinder engine 1 of this embodiment. The width of the output pulse REF is predeterminedly varied in dependence upon the number of the cylinder so as to discriminate a specific cylinder.

Referring to Figure 3(b) showing the POS signal, 180 POS signals per revolution of the engine 1 are produced, and 90 POS signals per combustion cycle of the engine are generated. By using the signal POS having such a high resolution, the detection of the rotational fluctuation in the cycle for one revolution (or one combustion) of the engine is determinable. In this respect, the period of each POS signal pulse, varies with crankshaft speed, and is measured. By storing and comparing data of adjacent pulses so it is possible to detect when the crankshaft reaches a peak value $N_{max}$. Especially, in this embodiment, the rotary plate 5 provided with 180 projections on the outer periphery thereof is fixed on the crankshaft 4 of the engine 1. While the crankshaft 4 directly transmits the rotational output of the engine 1, the camshaft does have what is called "play" due to an intermediary reduction system such as a gear, so that there is also some rotational fluctuation due to play and accurate determination of the engine revolutions cannot thus be determined. However if less accurate determination can be permitted then the rotation of the camshaft may, alternatively, be detected. The crankshaft 4, which is capable of directly detecting the engine output is therefore preferred as the take-off for measuring the engine rpm. Thus the position for attaching the rotary plate is not restricted to the crankshaft, and a similar rotary plate may be fixed on the camshaft to which the distributor 7 is attached so as to detect the rotational fluctuation in spite of lessening in the detection accuracy.

The relationship between the rotational fluctuation of the engine 1 detected by the POS signals and the combustion state will be described in detail in the following.

As shown in the timing chart in Figure 4, the four cylinders #1, #2, #3 and #4 of the engine each repeat the strokes of intake, compression, power and exhaust in series at every rotational angle of 720 degrees. These strokes are repeated in turn in each cylinder at a shift of 180 degrees. As a result, the number $N_e$ of revolutions of the engine 1 fluctuates at each power stroke in each cylinder due to the combustion state, namely, whether combustion is good or not, the combustion speed, and the like.

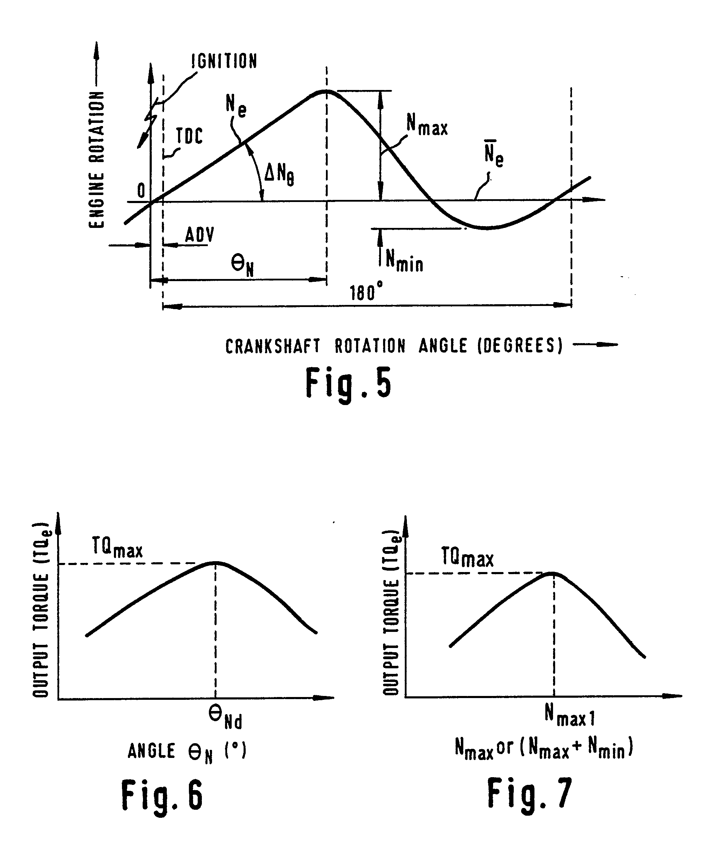

In order to investigate the fluctuation of the number $N_e$ of revolutions of the engine in detail, the fluctuation in one combustion cycle (at a crank angle of 180 degrees) is enlarged in Figure 5. In Figure 5, the average number of revolutions of the engine is an average value of, for example, the number of POS signals taken over 10ms intervals over a comparatively long period of say 50ms and is indicated by the symbol $\overline{N}_e$ In contrast, the number $N_e$ of revolutions determined at the minimum resolution unit (e.g., at every POS signal) fluctuates around the average number $\overline{N}_e$ of revolution. According to various experiments carried out by the present inventors, the number $N_e$ of revolutions of the engine reaches the maximum peak value $N_{max}$ by the energy produced by the expansion, i.e. power stroke, of each cylinder, and thereafter lowers to the minimum value $N_{min}$ due to the compression of another cylinder. The angle $\theta_N$, (measured from the ignition point (0) ahead of top dead centre (TDC) by an advance angle (ADV)) for producing the maximum value $N_{max}$, the value of the peak $N_{max}$ and the maximum fluctuation value $N_{max} + N_{min}$ fluctuate in accordance with the amount of fuel supply and the ignition timing, so that the control of these values have the same meaning as the control of the combustion itself of the engine. It is therefore possible to drive and control the combustion in each cylinder in the best condition by detecting in detail and analysing the change in the engine rpm $N_e$ of revolutions in the combustion cycle of the engine.

Thus, it is clear that the maximum peak value $N_{max}$ of the number $N_e$ of revolutions and the angle $\theta_N$ producing the maximum peak value are the values indicating the combustion state and that, accordingly, the engine combustion can be controlled on the basis of the detected values of $N_{max}$ and/or $\theta_N$. In the present invention, the amount of fuel supply and the ignition timing are controlled while comparing these detected values $N_{max}$ and $\theta_N$ with the values in the best combustion state of the engine although control can be made upon determination of $N_{max}$ or $\theta_N$.

Figures 6 to 8 show the relationships between $\theta_N$ and engine output torque, $N_{max}$ and the engine output torque, and the ignition advance angle ADV and $N_{max}$ ($N_{max} + N_{min}$), respectively.

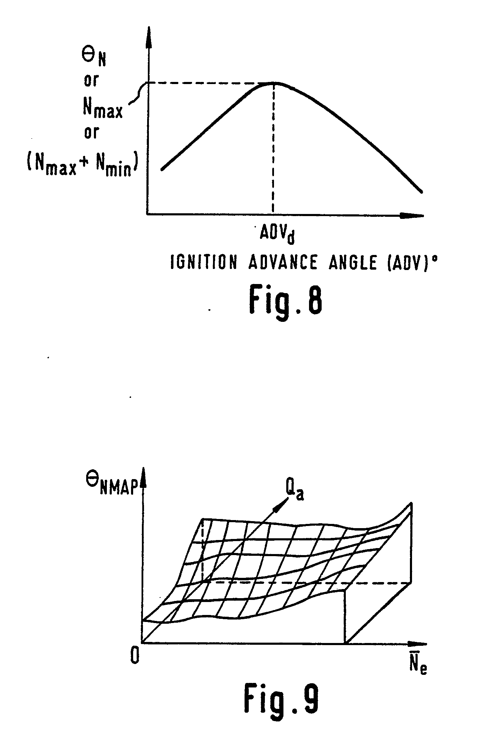

As shown in Figure 6, the output torque of the engine $TQ_e$ fluctuates in accordance with the angle $\theta_N$ at which the number $N_e$ of revolutions of the engine reaches the maximum peak value after ignition, and the maximum output torque $TQ_{max}$ is produced at a predetermined value $N_{max1}$ as shown in Figure 7. The angle $\theta_N$ at which the number $N_e$ of revolutions of the engine reaches the maximum peak value and the maximum value of $N_{max}$ depends on the ignition advance angle ADV, as shown in Figure 8, and at a predetermined ignition advance angle $ADV_d$, $\theta_N$ or $N_{max}$ or $N_{max} + N_{min}$ exhibits the maximum value. This fact, namely, that the optimum value of the ignition advance angle ADV is easily determined by monitoring $\theta_N$ and/or $N_{max}$ will be clear. The ratio (A/F) of air and fuel (not shown) which are supplied to each cylinder has a similar relationship, and $\theta_N$ and $N_{max}$ exhibit the maximum valued at a predetermined A/F. $N_{max}$ is approximately equal to $N_{max} + N_{min}$. However, because of variations in each cylinder due, for example, to differing frictional coefficient so the use of $N_{max} + N_{min}$ is preferable to only $N_{max}$.

In consideration of the relationship between the fluctuation of the number $N_e$ of revolutions of the engine, namely, $\theta_N$ and $N_{max}$ (or $N_{max} + N_{min}$), according to the present invention, the values of $\theta_N$ and $N_{max}$ (or $N_{min}$) are obtained in advance and the combustion of the engine, namely, the ignition advance angle ADV and the fuel injection pulse $T_i$ are controlled while comparing these values with the values actually detected from the engine. A three-dimensional map indicating the values obtained with respect to various engine driving states, namely, the intake air amount $Q_a$ and the average number $\overline{N}_e$ of revolutions is predetermined as shown in Figure 9. It is clear that it is possible to automatically obtain $\theta_N$ and $\theta_{NMAP}$ in the best combustion state by the use of this three-dimensional map if $Q_a$ and $\overline{N}_e$ are obtained. In more detail, it is possible to easily obtain $\theta_N$ and $\theta_{NMAP}$ by writing the values of $\overline{N}_e$, $Q_a$ and $\theta_{NMAP}$ in the EP-ROM 123 of the electronic control unit in advance and retrieving $\theta_{NMAP}$ in accordance with $Q_a$ and $\overline{N}_e$.

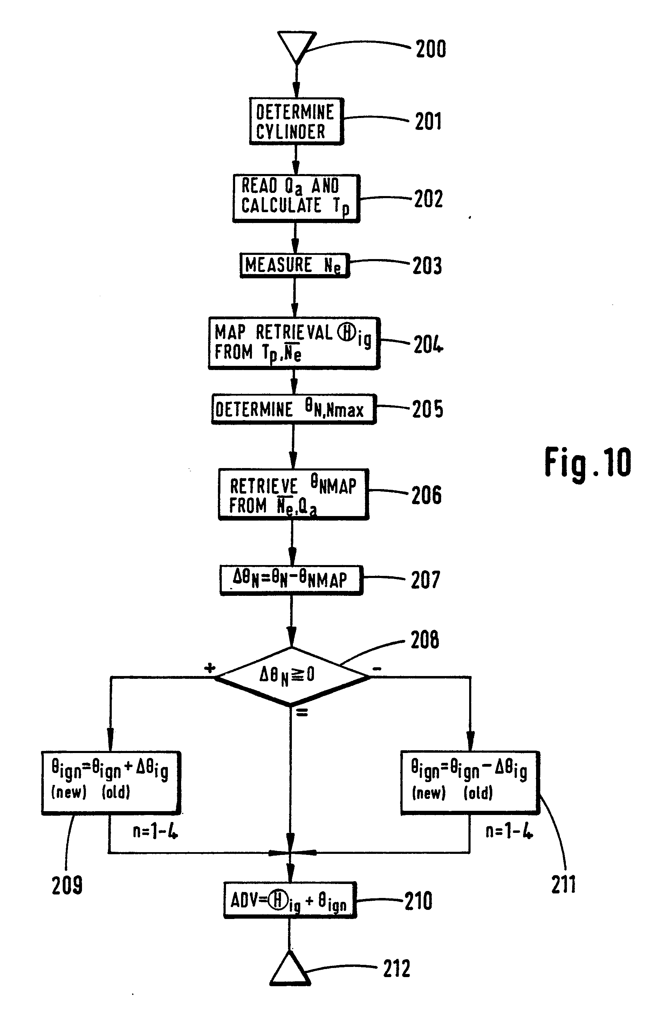

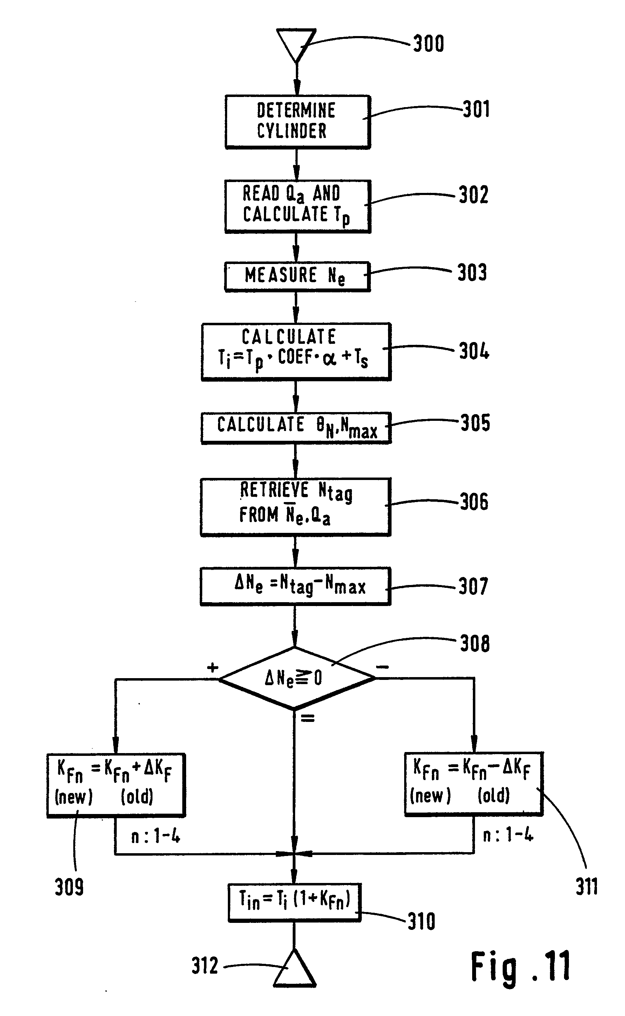

Figures 10 and 11 are flow charts for executing the engine combustion control in the present invention.

Figure 10 is a flow chart for controlling the ignition advance angle ADV. When the control flow is started at the step 200, the cylinder is determined from the signal REF at the step 201. At the step 202, the output $Q_a$ is taken from the air flow sensor 9 and the basic injection amount $T_p$ is calculated by utilising the average number $\overline{N}_e$ of revolutions as follows:-

$$T_p = k \cdot Q_a / \overline{N}_e \qquad (1)$$

wherein k is a constant.

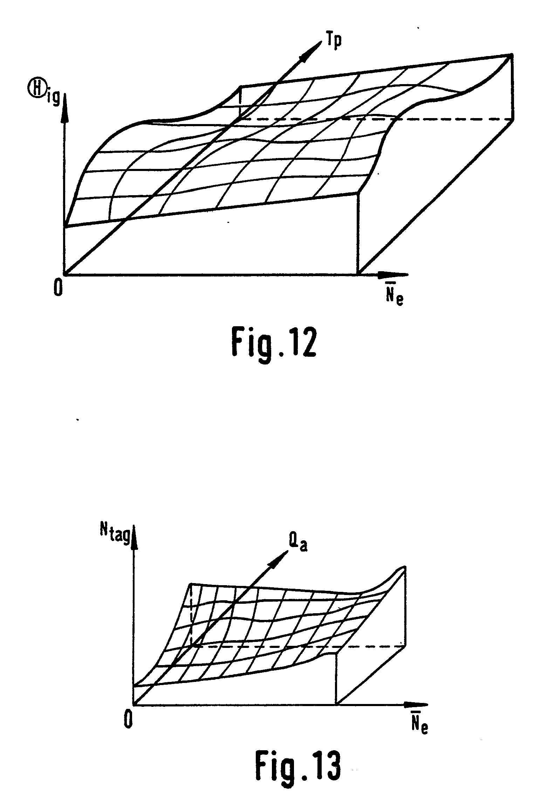

The process proceeds to the step 203, and the number $N_e$ of revolutions of the engine is measured by utilising the POS signals. At the step 204, the basic ignition timing $\theta_{ig}$ is obtained by map retrieval from the map shown in Figure 12 utilising the thus obtained $T_p$ and $\overline{N}_e$. At the step 205, $\theta_N$ and $N_{max}$ are determined, and at the step 206 $\theta_{NMAP}$ is retrieved by utilising the average number $\overline{N}_e$ of revolutions and $N_{max}$.

At the step 207, the following calculation is carried out:

$$\Delta\theta_N = \theta_N - \theta_{NMAP} \qquad (2)$$

At the step 208, if $\Delta\theta_N$ is positive (+), the process proceeds to the step 210 through the step 209, if it is zero (=), the process proceeds directly to the step 210, while if it is negative (-), the process proceeds to the step 210 through the step 211, and consequently ending at the step 212.

The step 209 is a step for advancing the angle by increasing the old ignition advance angle $\theta_{ign(old)}$ by a constant angle $\Delta\theta_{ign}$ because the ignition timing is too late and does not produce the optimum combustion state in which $\theta_{NMAP}$ is smaller than $\theta_N$ in the equation (2). At this step, the last suffix [n] of $\theta_{ign}$ represents the number of the cylinder of concern, and it is an integer 1 to 4.

At the step 211, $\Delta\theta_N$ is processed when it is negative in the formula (2). In this case, the new ignition advance angle $\theta_{ign}$ is reduced by $\Delta\theta_{ign}$. If $\Delta\theta_N = 0$, $\theta_{ign}$ is not corrected and at the step 210, the ignition timing for the corresponding cylinder is determined by the following formula:

$$ADV = \theta_{ig} + \theta_{ign} \qquad (3)$$

wherein $\theta_{ig}$ is the basic ignition timing obtained by map retrieval (as shown in Figure 12) at the step 204.

Figure 11 is a flow chart for controlling the injection pulse width of the injector 2. This flow is similar to the flow shown in Figure 10. At the step 300, the flow is started and at the step 301, the cylinder is determined. At the step 302, the output $Q_a$ is taken and $T_p$ is calculated from the formula (1) and at the step 303, and $N_e$ is calculated from the POS signals in the same way as in the flow for controlling the ignition advance angle ADV.

At the step 304, the basic injection pulse width $T_i$ is obtained by utilising the thus-obtained $T_p$ from the following formula:

$$T_i = T_p \cdot COEF \cdot \alpha + T_s \qquad (4)$$

wherein COEF is a correction coefficient which will be explained hereinbelow, $\alpha$ is an air fuel ratio correction coefficient, and $T_s$ is a voltage correction coefficient for varying and correcting the battery voltage.

In the same way as in the flow for controlling the ignition advance angle ADV, at the step 305, $\theta_N$ and $N_{max}$ are calculated and thereafter at the step 306, $N_{tag}$ which correspond to $\overline{N}_e$ and $Q_a$ is retrieved from a map(shown in Figure 13). $N_{tag}$ is the value of $N_{max}$ which is required for the most desirable engine driving state. This value is stored in the RAM 124 on the basis of the predetermined results as shown in the map of Figure 13.

At the step 307, $\Delta Ne$ is calculated from the following formula:

$$\Delta N_e = N_{tag} - N_{max} \qquad (5)$$

In other words, at the step 307, judgment is made as to whether or not the number of revolutions has reached the desirable number due to the expansion of the corresponding cylinder. If the $\Delta N_e$ is positive (+) as a result of this judgment, it means that the combustion of the corresponding cylinder is insufficient for producing sufficient power energy. It is therefore necessary to increase the amount of injection fuel supply.

More specifically, if $\Delta N_e$ is judged to be positive (+) at the step 308, the process proceeds to the step 309 to increase $K_{Fn}$, which is a correction coefficient COEF of the basic fuel injection pulse width $T_1$, by a predetermined value (constant value) by the following formula:

$$K_{Fn} = K_{Fn} + \Delta K_F \qquad \ldots \ldots (6)$$
$$\text{(new) (old)}$$

On the other hand, if the result of the formula (5) is zero (0), the flow proceeds directly to the step 310, and if the result of the formula (5) is negative (-), the correction coefficient $K_{Fn}$ is decreased by the predetermined value $\Delta K_F$, and the process proceeds to the step 310 thereafter.

At the step 310, the value of the basic fuel injection pulse width $T_1$ obtained at the step 304 is corrected by the following formula in consideration of the $K_{Fn}$ of the corresponding cylinder obtained in the above-described flow:

$$T_{in} = T_i (1 + K_{Fn}) \qquad (7)$$

wherein suffix [n] in $T_{in}$ represents the number of the cylinder of concern and is an integer 1 to 4. In this way, the injection fuel supply is determined for each cylinder, thereby ending the flow at the step 312.

In the above-described embodiment, the ignition advance angle is controlled on the basis of $\theta_N$ from among the variable elements in the number of revolutions of the engine but it is clear that control based on $N_{max}$ is also possible as shown in Figure 11. Conversely, it is also possible to control the width of the fuel injection pulse to the injector, by using $\theta_N$ and to control ignition timing by $N_{max}$.

As will now be understood from the above explanation, in the multiple-cylinder engine combustion control apparatus of the present invention, it is possible to control the combustion state of each cylinder in a multiple-cylinder engine in the best state and accurately. Thus, it is possible to provide a multiple-cylinder engine combustion control apparatus which is stable with little fluctuation in the output of each cylinder and which is capable of satisfying a reduction in fuel cost.

**Claims**

1. A multi-cylinder engine control apparatus including means for detecting variation in the rotational speed of the engine (4-6, 12), means for determining the cylinder causing the variation (12), and means (12, 2, 16) for modifying the operating condition of said cylinder causing the variation to correct the rotational speed variation.

2. An apparatus as claimed in claim 1 wherein the means for modifying the cylinder operating condition is a means arranged to vary at least one of engine ignition timing and fuel injection pulse width.

3. An apparatus as claimed in claim 1 or 2 wherein the means for determining the cylinder causing the variation includes detecting means for at least one of the maximum crank shaft speed ($N_{max}$), the summation of maximum and minimum crank shaft speed ($N_{max} + N_{min}$), and the crank shaft rotational angle at which maximum rotation speed occurs ($\theta_N$).

4. An apparatus as claimed in claim 3 wherein the detecting means for the crank shaft rotational angle at which maximum rotation speed occurs is measured from the time of ignition of a relevant cylinder.

5. An apparatus as claimed in any preceding claim wherein the means for detecting variation in the rotational speed of the engine includes one of a crank shaft rotational angle sensor (6) and a cam shaft rotational angle sensor, said sensor being arranged to produce a pulsed output (POS) the period of which varies in dependence upon the engine rotational speed.

6. An apparatus as claimed in claim 5 wherein sampling means are provided for sampling the period of the pulsed output from the sensor and for determining when at least one of a maximum, a minimum, and an average engine rotational speed is achieved.

7. An apparatus as claimed in claim 6 wherein the means for determining the cylinder causing the variation comprises said rotational angle sensor (6), cylinder position timing means arranged to produce a pulse train (REF), the period of the pulses in said pulse train being representative of a particular cylinder, and counting means for counting the number of pulses produced by the rotational angle sensor in the period of the pulses in said pulse train.

8. An apparatus as claimed in claim 7 wherein the number of pulses in said pulse train is the same as the number of engine cylinders.

9. An apparatus as claimed in claim 3 wherein a processing means (12) is adapted to determine and compare the actual crank shaft rotational angle at which maximum rotation occurs ($\theta_N$) with a predetermined crank shaft rotational angle at which maximum rotation occurs ($\theta_{NMAP}$), and to combine the difference therebetween with a basic ignition timing angle ($\theta_{ig}$) to produce the corrected ignition timing signal.

10. An apparatus as claimed in claim 3 wherein there is provided processing means (12) adapted to determine and compare the actual maximum crank shaft speed ($N_{max}$) with a predetermined maximum crank shaft speed (N$_{tag}$), and to correct the difference therebetween to a correction coefficient for the fuel injector pulse width and wherein a basic fuel injection pulse width is modified by said correction coefficient.

11. A method of controlling a multicylinder engine including the steps of detecting variation in the rotational speed of the engine, determining the cylinder causing the variation, and modifying the operating conditions of the cylinder causing the variation to correct the rotational speed variation.

12. A method as claimed in claim 11 wherein the step of modifying the cylinder operating condition is performed by varying at least one of engine ignition timing and fuel injection pulse width.

13. A method as claimed in claim 11 or 12 wherein the cylinder causing the variation is determined by detecting at least one of the maximum crank shaft speed, the summation of maximum and minimum crank shank speed, and the crank shaft rotational angle at which maximum rotation speed occurs.

14. A method as claimed in any of claims 11 to 13 wherein the variation in the rotational speed of the engine is performed by detecting one of crank shaft rotational speed and cam shaft rotational speed, the detector being arranged to produced a pulsed output the period of which varies in dependence upon the engine rotational speed.

15. A method as claimed in claim 14 wherein sampling means are provided for sampling the period of the pulsed output from the detector and for determining when at least one of a maximum, a minimum, and an average engine rotational speed is achieved.

16. A method as claimed in claim 15 wherein the determination of the cylinder causing the variation is performed by measuring the rotational angle of the engine, producing a cylinder position pulse train, the period of the pulses in said pulse train being representative of a particular cylinder, and counting the number of pulses produced as a result of engine rotation in the period of the pulses in said pulse train.

17. An apparatus as claimed in claim 13 wherein the actual crank shaft rotational angle at which maximum rotation occurs is compared with a predetermined crank shaft rotational angle at which maximum rotation occurs, and the difference therebetween is combined with a basic ignition angle to produce the corrected ignition timing signal.

18. A method as claimed in claim 13 wherein the actual maximum crank shaft speed is determined and compared with a predetermined maximum crank shaft speed, and the difference therebetween is converted to a correction coefficient for the fuel injector pulse width and wherein a basic fuel injection pulse width is modified by said correction coefficient.

**Fig.1**

Fig. 2

EP 0 385 793 A2

REF

**Fig.3A**

POS

**Fig.3B**

| CYLINDERS | | | | | |
|---|---|---|---|---|---|
| #1 | INTAKE | COMPRESSION | POWER | DISCHARGE | INTAKE |
| #4 | DISCHARGE | INTAKE | COMPRESSION | POWER | DISCHARGE |
| #3 | POWER | DISCHARGE | INTAKE | COMPRESSION | POWER |
| #2 | COMPRESSION | POWER | DISCHARGE | INTAKE | COMPRESSION |

Ne

0    180°    360°    540°    720°    900°

**Fig.4**

Fig.5

CRANKSHAFT ROTATION ANGLE (DEGREES) ⟶

Fig.6

ANGLE $\Theta_N$ (°)

Fig.7

$N_{max}$ or $(N_{max} + N_{min})$

$\Theta_N$
or
$N_{max}$
or
$(N_{max} + N_{min})$

$ADV_d$

IGNITION ADVANCE ANGLE (ADV)°

## Fig.8

$\Theta_{NMAP}$

$Q_a$

0

$\bar{N}_e$

## Fig.9

Fig.10

300

DETERMINE
CYLINDER — 301

READ $Q_a$ AND
CALCULATE $T_p$ — 302

MEASURE $N_e$ — 303

CALCULATE
$T_i = T_p \cdot COEF \cdot \alpha + T_s$ — 304

CALCULATE $\theta_N, N_{max}$ — 305

RETRIEVE $N_{tag}$
FROM $\overline{N}_e, Q_a$ — 306

$\Delta N_e = N_{tag} - N_{max}$ — 307

$\Delta N_e \gtreqless 0$ — 308

+    −    =

$K_{Fn} = K_{Fn} + \Delta K_F$
(new)    (old)
$n : 1-4$

$K_{Fn} = K_{Fn} - \Delta K_F$
(new)    (old)
$n : 1-4$

309    311

$T_{in} = T_i (1 + K_{Fn})$ — 310

312

Fig .11

$\oplus_{ig}$

Tp

0             $\overline{N}_e$

**Fig.12**

$N_{tag}$

$Q_a$

0             $\overline{N}_e$

**Fig.13**